# EUROPEAN PATENT APPLICATION

(11) **EP 2 141 590 A1**
(43) Date of publication of application: **06.01.2010**
(21) Application number: 08305331.4
(22) Date of filing: 26.06.2008
(51) Int. Cl.: G06F 9/445

(54) **Method of managing data in a portable electronic device having a plurality of controllers**

(71) Applicant: Axalto S.A., 92190 Meudon (FR)
(72) Inventor: Thill, Michel, 78340 Les Clayes sous Bois (FR); Marseille, François-Xavier, 78160 Marly le Roi (FR)

(57) **Abstract**

The invention is a method of managing data in a portable electronic device comprising first and second controllers. The first controller comprises a first microprocessor and a first non volatile memory. The first microprocessor comprises a first piece of code. The second controller comprises a second microprocessor and a second non volatile memory. The second non volatile memory comprises a first executable data. The method comprises the following steps of:
a) loading and activating the first piece of code in the first microprocessor,
b) sending by the first controller a first request for retrieving the first executable data from the second non volatile memory,
c) loading the first executable data into the first controller, and
d) executing the first executable data by the first microprocessor.

## Description

### (Field of the invention)

The present invention relates to methods of managing data in a portable electronic device comprising a plurality of controllers. It relates particularly to methods of managing data in a portable electronic device comprising at least a controller with an embedded non volatile memory.

### (Prior art)

Portable electronic devices may comprise several controllers. In particular, portable electronic devices may have two controllers providing specific features. Such devices are based on a dual architecture. For example, a portable electronic device may comprise a smart card controller and a second controller compliant with SD (also named Secure Digital ®), MMC (also named Multi Media Card ®), or USB (also named Universal Serial Bus ®) standards. Such a dual architecture could be met in portable devices providing radio frequency communication features like NFC, Bluetooth, Zigbee or any other contactless channels.

Very often, at least one controller of a dual architecture comprises a ROM which has a limited size. The software code dedicated to such a controller is partly stored in its ROM and partly stored in an external non volatile memory. In this case, the non volatile memory component is distinct from the controller. The non volatile memory may be of EEPROM, flash NOR or Flash NAND type. In this case the non volatile memory is dedicated to the controller and is managed by the controller. When the controller is powered on the boot sequence is started. The code part stored in the ROM is directly accessible by the controller then the complementary part is loaded from the non volatile memory to the RAM of the controller. Thus, in a dual architecture, two controllers and two external non volatile memories are required. The price of a non volatile memory component is not negligible for a dual architecture device. A problem is to optimize the cost of a portable electronic device having a plurality of controllers.

### (Summary of the Invention)

An object of the invention is to solve the above mentioned technical problems. The invention provides a solution for allowing the portable electronic device to work without any external non volatile memory component.

The object of the present invention is a portable electronic device comprising first and second controllers. The first controller comprises a first microprocessor, a first non volatile memory and a first interface. The second controller comprises a second microprocessor, a second non volatile memory and a second interface. The first and second interfaces are linked. The second non volatile memory comprises a first executable data intended to be run by the first microprocessor. The first controller comprises a first means which is capable of loading the first executable data from the second non volatile memory to the first controller. The first controller comprises a second means which is capable of starting execution of the first executable data by the first microprocessor.

In a preferred embodiment the first non volatile memory is a read-only memory.

Advantageously, the first controller may comprise a third means capable of requesting a write operation of second data in the second non volatile memory.

The second non volatile memory may comprise a third data and the first controller may comprise fourth means capable of retrieving the third data from the second non volatile memory to the first controller.

Advantageously, the second microprocessor may run an application which is intended to access the first controller through first and second interfaces.

In a preferred embodiment the second controller is a smart card controller.

Advantageously, the second interface may be capable of communicating according to ISO-7816 standard or SWP protocol.

The first controller may comprise a third interface able to communicate through a contact channel. The third interface may be able to communicate through SD, MMC or USB protocol.

Alternatively, the first controller may comprise a third interface able to communicate through a contactless channel, a vocal channel or a visual channel.

In another embodiment the first and second interfaces may be linked via an interface chip.

Another object of the invention is a method of managing data in a portable electronic device. The portable electronic device comprises first and second controllers. The first controller comprises a first microprocessor and a first non volatile memory. The first microprocessor comprises a first piece of code. The second controller comprises a second microprocessor and a second non volatile memory. The second non volatile memory comprises a first executable data. The method comprises the following steps:
a) loading and activating the first piece of code in the first microprocessor,
b) sending by the first controller a first request for retrieving the first executable data from the second non volatile memory,
c) loading the first executable data into the first controller, and
d) executing the first executable data by the first microprocessor.

Advantageously, the method may comprise the further step of sending by the first controller a second request for writing a second data in the second non volatile memory.

The method may also comprise the further steps:
f) sending by the first controller a third request for retrieving a third data from the second non volatile memory,
g) loading the third data into the first controller.

The first, second and third requests of the method may be exchanged through an interface chip.

Advantageously, the method may be carried out with a second controller of smart card type and with a second interface that may communicates according to ISO-7816 standard or SWP protocol.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a first embodiment of a portable electronic device according to the invention;
- Figure 2 depicts schematically an example of a second embodiment of a portable electronic device according to the invention;
- Figure 3 is a flow chart showing a boot sequence of a controller in a portable electronic device; and
- Figure 4 is a flow chart showing how data may be managed by a controller into the memory of another controller.

### (Detailed description of the preferred embodiments)

The present invention is well-suited for portable electronic devices having a controller with limited memory resources. In particular, the invention is useful when one of the controllers has no writable memory and only a small ROM.

An advantage of the invention is to avoid requiring an external non volatile memory component dedicated to one of the controllers of the portable electronic device.

According to the invention, a first controller provides access to its own embedded non volatile memory to another controller into a portable electronic device.

The invention may apply to any types of portable electronic device comprising at least two controllers. In particular, the invention may apply to portable electronic devices comprising a smart card controller and another controller.

An advantage of the invention is to provide a method for extending the memory available for a controller in a multi-controller architecture device. The extended memory may be used for storing executable code required for the booting step of a controller.

Advantageously, the extended memory may be used for storing any kind of data managed by the controller with limited memory resources.

Advantageously, the invention may allow a secured storage of data managed by the controller that uses memory of another controller.

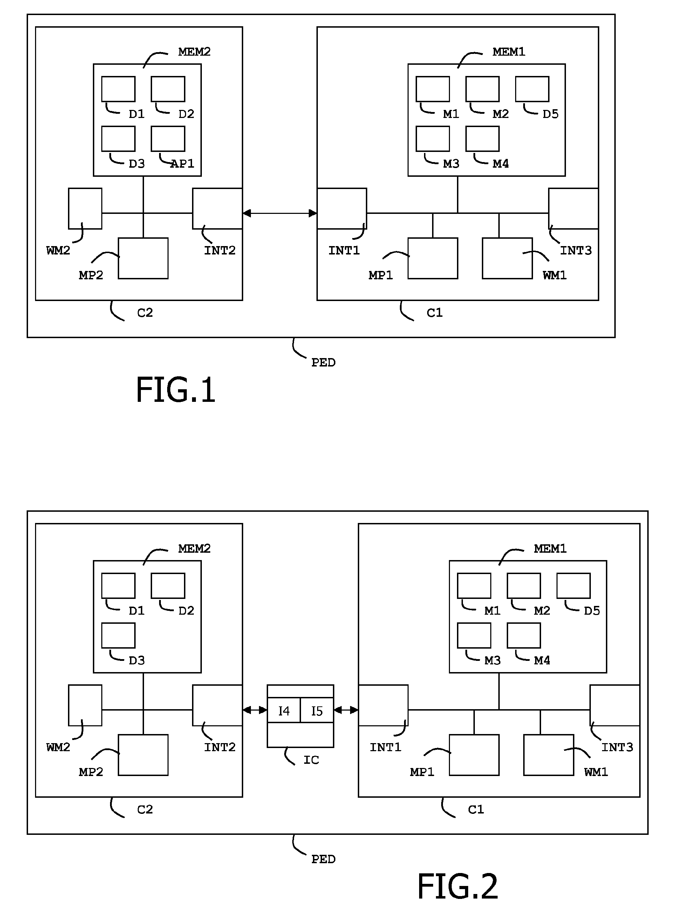

**Figure 1** shows an example of portable electronic device comprising two controllers.

The portable electronic device PED comprises a first controller C1 and a second controller C2. The first controller C1 comprises a working memory WM1, a non volatile memory MEM1, a microprocessor MP1 and two communication interfaces INT1 and INT3. The communication interface INT1 is linked to the second controller C2. The communication interface INT3 is designed for communication of SD type. The working memory WM1 is of RAM type and the non volatile memory MEM1 is of ROM type.

The second controller C2 comprises a working memory WM2, a non volatile memory MEM2, a microprocessor MP2 and one communication interface INT2. The communication interface INT2 is linked to the communication interface INT1 of the first second controller C1. The second controller C2 is of smart card type and the communication interface INT2 is designed for communication according to ISO-7816 standard. The working memory WM2 is of RAM type and the non volatile memory MEM2 is of EEPROM type.

Alternatively, the non volatile memory MEM2 may be a Flash NAND or Flash NOR for example.

The non volatile memory MEM2 comprises a first executable data D1 which is intended to be run by the first microprocessor MP1. The executable data D1 is a part of the booting software code required for starting the microprocessor MP1 up.

The non volatile memory MEM1 of the first controller C1 comprises four means M1 to M4 which are implemented by four pieces of software. The first means M1 is a piece of software code able to load the executable data D1 into the first controller C1. The second means M2 is a piece of software code able to start execution of the loaded executable data D1 by the microprocessor MP1.

Thus the boot operation of the microprocessor MP1 may be carried out through the successive use of a first booting part stored in the non volatile memory MEM1 and an additional booting part stored in the non volatile memory MEM2. In other words, the first means M1 has a function of bootstrap toward the memory of another controller and via an ISO-7816 link.

Alternatively, the link may be implemented through the SWP protocol.The SWP protocol is defined in ETSI, in particular in the ETSI TS 102 613 v7.1.0 (2008-02) .

The third means M3 is a piece of software code able to request a write operation of data D2 in the non volatile memory MEM2 of the second controller C2.

The fourth means M4 is a piece of software code able to retrieve a data D3 stored in the second non volatile memory MEM2.

Thanks to third and fourth means M3 and M4, the controller C1 is capable of managing read and write data in the non volatile memory MEM2 of the second controller C2. Thus the non volatile memory MEM2 of the smart card controller C2 can be managed as an extension of the available non volatile memory of the controller C1. The communication interface INT1 of the controller C1 is designed for exchanging data according to the ISO-7816 standard.

Advantageously, the controller C1 may comprise a security data D5 which is used for establishing a secured communication channel with the smart card C2.

Alternatively, the four means M1 to M4 may be implemented by one or a plurality of pieces of software.

Advantageously, the controller C2 comprises an application AP1 which is intended to be run by the microprocessor MP2. Said application AP1 may be intended to access the controller C1 through the two interfaces INT1 and INT2. In this case, data exchanges generated by the application AP1 and data exchanges generated by the means M1, M3 and M4 may be mixed on the communication interfaces INT1 and INT2.

**Figure 2** shows a second example of portable electronic device comprising two controllers. In this second embodiment, an interface chip IC is placed between the two controllers C1 and C2. The interface chip IC comprises two communication interfaces 14 en 15. The communication interface 14 is designed for communication according to ISO-7816 standard and the communication interface 15 is designed for communicating with interface 11. In this case, both communication interfaces INT1 and 15 may be compliant with UART (Universal Asynchronous Receiver Transmitter) bus, SPI (Serial Peripheral Interface) bus or I2C (Inter Integrated Circuit) bus. In the example of Figure 2, the interface chip IC provides ISO-7816 reader capability to the controller C1.

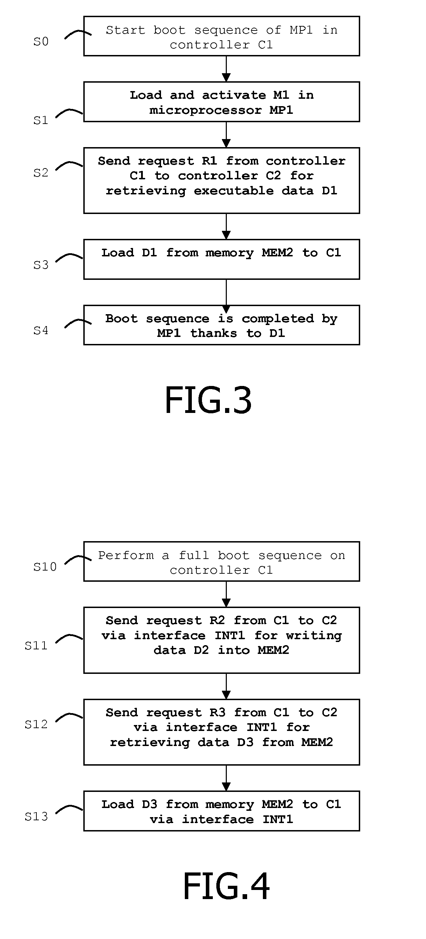

**Figure 3** shows an example of step sequence for booting the microprocessor MP1 of the controller C1. The sequence starts at step S0 when the portable electronic device PED is powered. Then the piece of software M1 is loaded and activated into the microprocessor MP1 at step S1. The piece of software M1 may perform a first set of initialization operations. At step S2, the means M1 generates a request R1 which is sent to the controller C2. The request R1 aims at retrieving executable data D1 from the non volatile memory MEM2 of the controller C2. The request R1 may correspond to a set of several APDU commands intended to be sent to the smart card C2. Then the controller C2 sends the requested data D1 to the controller C1. At step S3, the controller C1 loads data D1 in the working memory WM1. Then the data D1 is run by the microprocessor MP1 in order to complete the boot sequence at step S4.

In the above-described example, the communication interface INT1 is able to send and receive data to/from the controller C2 as a smart card reader.

**Figure 4** shows an example of step sequences where the controller C1 uses the non volatile memory of the controller C2. The sequence starts at step S10 where a full booting of the controller C1 is assumed to be performed. The booting of C1 may be carried out according to the sequence described at Figure 3. The microprocessor MP1 sends a request R2 to the controller C2 at step S11. The request R2 aims at writing a data D2 to the non volatile memory MEM2 of the controller C2. The request R2 may correspond to a set of several APDU commands intended to be sent to the smart card C2. The writing operation may correspond to the writing of a new data D2 or to the overwriting of a previously existing value of data D2. Then at step S12, the microprocessor MP1 sends a request R3 to the controller C2. The request R3 aims at retrieving a data D3 from the non volatile memory MEM2. The request R3 may correspond to a set of several APDU commands intended to be sent to the smart card C2. Then the controller C2 sends the requested data D3 to the controller C1. At step S13, the data D3 is loaded into the controller C1 and used by the microprocessor MP1.

Thanks to the present invention, the microprocessor MP1 is able to write and read any kinds of data in the memory MEM2 of the second controller C2. In particular, the microprocessor MP1 is able to build and manage a file system in the memory MEM2.

Advantageously, all exchanges between the two controllers C1 and C2 may be protected by a secure mechanism. Such secure mechanisms are well known of a person skilled in the art of smart card.

## Claims

1. **A portable electronic device (PED)** comprising first and second controllers (C1, C2), said first controller (C1) comprising a first microprocessor (MP1), a first non volatile memory (MEM1) and a first interface (INT1), said second controller (C2) comprising a second microprocessor (MP2), a second non volatile memory (MEM2) and a second interface (INT2), said first and second interfaces (INT1, INT2) being linked,
**characterized in that** said second non volatile memory (MEM2) comprises first executable data (D1) intended to be run by the first microprocessor (MP1), **in that** the first controller (C1) comprises first means (M1) able to load said first executable data (D1) from second non volatile memory (MEM2) to the first controller (C1), and **in that** the first controller (C1) comprises second means (M2) able to start execution of the first executable data (D1) by the first microprocessor (MP1) .

2. A portable electronic device (PED) according to claim 1, wherein said first non volatile memory (MEM1) is a read-only memory.

3. A portable electronic device (PED) according to one of claims 1 to 2, wherein said first controller (C1) comprises third means (M3) able to request a write operation of second data (D2) in the second non volatile memory (MEM2).

4. A portable electronic device (PED) according to one of claims 1 to 3, wherein said second non volatile memory (MEM2) is intended to comprise third data (D3), and wherein said first controller (C1) comprises fourth means (M4) able to retrieve said third data (D3) from the second non volatile memory (MEM2) to the first controller (C1) .

5. A portable electronic device (PED) according to one of claims 1 to 4, wherein an application (AP1) is intended to be run by the second microprocessor (MP2) and wherein said application (AP1) is intended to access the first controller (C1) through first and second interfaces (INT1, INT2).

6. A portable electronic device (PED) according to one of claims 1 to 5, wherein said second controller (C2) is a smart card controller.

7. A portable electronic device (PED) according to claim 6, wherein said second interface (INT2) is able to communicate according to ISO-7816 standard or SWP protocol.

8. A portable electronic device (PED) according to one of claims 1 to 7, wherein said first controller (C1) comprises a third interface (INT3) able to communicate through a contact channel.

9. A portable electronic device (PED) according to claim 8, wherein said third interface (INT3) is able to communicate through SD, MMC or USB protocol.

10. A portable electronic device (PED) according to one of claims 1 to 7, wherein said first controller (C1) comprises a third interface (INT3) able to communicate through a contactless channel, a vocal channel or a visual channel.

11. A portable electronic device (PED) according to one of claims 1 to 10, wherein first and second interfaces (INT1, INT2) are linked via an interface chip (IC) .

12. A **method** of managing data in a portable electronic device (PED) comprising first and second controllers (C1, C2), said first controller (C1) comprising a first microprocessor (MP1) and a first non volatile memory (MEM1), said first microprocessor (MP1) comprising a first piece of code (M1), said second controller (C2) comprising a second microprocessor (MP2) and a second non volatile memory (MEM2), said second non volatile memory (MEM2) comprising a first executable data (D1), said method comprising the following step:
a) loading (S1) and activating the first piece of code (M1) in the first microprocessor (MP1),
**characterized in that** said method comprises the steps:
b) sending (S2) by the first controller (C1) a first request (R1) for retrieving the first executable data (D1) from the second non volatile memory (MEM2),
c) loading (S3) the first executable data (D1) into the first controller (C1),
d) executing (S4) the first executable data (D1) by the first microprocessor (MP1).

13. A method according to claim 12, wherein said method comprises the further step:
e) sending (S11) by the first controller (C1) a second request (R2) for writing a second data (D2) in the second non volatile memory (MEM2).

14. A method according to one of claims 12 to 13, wherein said method comprises the further steps:
f) sending (S12) by the first controller (C1) a third request (R3) for retrieving a third data (D3) from the second non volatile memory (MEM2),
g) loading (S13) the third data (D3) into the first controller (C1).

15. A method according to one of claims 12 to 14, wherein said first, second and third requests (R1, R2, R3) are exchanged through an interface chip (IC).

16. A method according to one of claims 12 to 15, wherein said second controller (C2) is a smart card controller and wherein said second interface (INT2) communicates according to ISO-7816 standard or SWP protocol.
